# EUROPÄISCHE PATENTANMELDUNG

(11) **EP 1 912 405 A1**
(43) Veröffentlichungstag der Anmeldung: **16.04.2008**
(21) Anmeldenummer: 07019345.3
(22) Anmeldetag: 02.10.2007
(51) Int. Cl.: H04L 29/06

(54) **Initialisierung einer VoIP-Verbindung**

(30) Priorität: 09.10.2006 DE 102006047648
(71) Anmelder: Giesecke & Devrient GmbH, 81677 München (DE)
(72) Erfinder: Spitz, Stephan, Dr., 81247 München (DE); Aschauer, Hans, Dr., 81829 München (DE); Bauer, Sven, Dr., 81543 München (DE)

(57) **Zusammenfassung**

Die Erfindung schafft ein Verfahren zur Initialisierung einer VoIP-Verbindung zwischen einem ersten Teilnehmer und mindestens einem zweiten Teilnehmer, wobei, gemäß einem Signalisierungsprotokoll, durch einen Verbindungsagenten des ersten Teilnehmers eine IP-Adresse übermittelt und/ oder empfangen wird. Der Verbindungsagent ist in einem mit einem Mikroprozessor-Chip ausgestatteten Sicherheitsmodul implementiert. Ein entsprechendes System wird ebenfalls angegeben.

## Beschreibung

Die Erfindung betrifft ein Verfahren zur Initialisierung einer VoIP-Verbindung zwischen einem ersten Teilnehmer und mindestens einem zweiten Teilnehmer gemäß dem Oberbegriff von Anspruch 1, und ein entsprechendes System.

Als kostengünstige Alternative zu herkömmlichen Telefonverbindungen etabliert sich zunehmend die Internet-Protokoll(IP)-basierte Telefonie. Hierbei werden Sprachdaten über eine Internet-Protokoll(IP)-basierte Verbindung übertragen, z.B. über das Internet, oder über eine LAN-Verbindung (LAN= Local Area Network) oder über eine WLAN-Verbindung (WLAN = Wireless LAN). Jedoch auch für Multimediasitzungen im Allgemeinen, wie beispielsweise Videokonferenzen, bieten sich Internet-Protokoll(IP)-basierte Verbindungen an. Neben Sprachdaten können über die Internet-Protokoll(IP)-basierte Verbindung beispielsweise Videodaten übertragen werden, und je nach Bedarf weitere Daten, z.B. Unterlagen für die Teilnehmer an der Multimediasitzung.

Mit dem Begriff VoIP-Verbindung wird jede Art von IP-basierter Sitzung insbesondere Multimediasitzung unter Verwendung von VoIP-Protokollen bezeichnet. Spezialfälle von VoIP-Verbindungen sind Internettelefonie-Verbindungen (IP-basierte Telefonie-Verbindungen).

Die grundlegende Funktionsweise von VoIP ist beispielsweise in einer Studie des Bundesamts für Sicherheit in der Informationstechnik (BSI) eingegangen, "VoIPSEC, Studie zur Sicherheit von Voice over Internet Protocol", Bundesamt für Sicherheit in der Informationstechnik, Oktober 2005, http://www.bsi.bund.de (BSI-Studie), oder in einer Studie des National Institute of Standards and Technology (NIST), "Security Considerations for Voice Over IP Systems", D.R. Kuhn, T.J. Walsh, S. Fries, Januar 2005 (NIST-Studie), beschrieben. Dort sind auch Beispiele von Multimediasitzungen angegeben, insbesondere im Kapitel "2.1.2 VoIP-Anwendungsszenarien" der BSI-Studie. Einzelne Spezifikationen, die für die vorliegende Erfindung von Bedeutung sind, sind beispielsweise die SIP-Spezifikation rfc3261 und die MIKEY-Spezifikation rfc3830.

Bei einer herkömmlichen, leitungsvermittelten Telefonverbindung ist jedes Endgerät an einen festen Port physikalisch angeschlossen, durch den die Authentizität jedes Teilnehmer-Anschlusses gewährleistet ist. Weiter stellt das Telefonnetz den verbundenen Endgeräten einen festen Kanal zur Sprachübertragung zur Verfügung, so dass eine gewisse Vertraulichkeit der Sprachübertragung zwischen den Endgeräten gewährleistet ist.

Bei einer Internet-Protokoll(IP)-basierten Verbindung sind die Teilnehmer, z.B. Anrufer und Angerufener, durch ihre jeweilige IP-Adresse identifiziert, die variieren kann. Die Sprachdatenübermittlung erfolgt paketorientiert und der Verbindung ist kein fester Übertragungskanal zugewiesen. Zu übertragende Daten werden in Pakete aufgeteilt, jedes Paket mit der IP-Adresse des Angerufenen versehen, und die Pakete an die IP-Adresse des Angerufenen versandt, wobei die Übertragungswege der einzelnen Pakete in der Regel unterschiedlich sind.

Im Bild eines mehrschichtigen Protokollmodells (wie z.B. OSI) baut eine VoIP-Verbindung auf dem Internet-Protokoll IP als einer unteren Protokollschicht auf, auf der, direkt oder über weitere Schichten, mehrere VoIP-spezifische Protokolle aufsetzen. Beispiele für VoIP-spezifische Protokolle sind das Protokoll H.323 und die H.323 untergeordneten Transportprotokolle RTP (Real-Time Transport Protocol) für die Echtzeit-Übertragung von Sprach- und Videodaten über paketorientierte Netze und SRTP (Secured RTP) für die verschlüsselte Echtzeit-Übertragung von Sprach- und Videodaten; das Signalisierungsprotokoll SIP (Session Initiation Protocol) oder H.323, das letztere mit einem der Signalisierungsprotokolle H.225 oder H.245, für die Signalisierung, also den Verbindungsaufbau; das auf das Signalisierungsprotokoll (z.B. SIP, H.225, H.245) aufsetzende Schlüsselverwaltungsprotokoll MIKEY (Multimedia Internet Keying) oder das auf das Transportprotokoll RTP aufsetzende Schlüsselverwaltungsprotokoll ZRTP für eine Authentisierung zwischen Teilnehmern an einer VoIP-Verbindung, die Erzeugung von Schlüsseln und den Schlüsselaustausch für eine nachfolgende verschlüsselte Verbindung nach SRTP.

Als Endgeräte für VoIP-Verbindungen können beispielsweise verwendet werden: Festnetztelefone ("Hardphones"), Konferenzanlagen, Mobiltelefone und andere mobile Endgeräte wie PDAs, Notebooks mit Mobiltelefonsteckkarte oder -token; oder sogenannte Softphones, d.h. Computer (PCs, Notebooks, PDAs etc.) mit einer integrierten Software-Anwendung mit der Funktionalität eines Telefons im weitesten Sinn, z.B. eines der vorstehend angeführten Endgeräte. Mögliche VoIP-Endgeräte sind beispielsweise in der NIST-Studie im Kapitel "2.VoIP-Equipment" angegeben, oder in der BSI-Studie im Kapitel "3.3.3 VoIP-Endgeräte".

Jede VoIP-Verbindung beginnt mit der Signalisierung, also dem Verbindungsaufbau. Ein Teilschritt der Signalisierung ist die Initialisierung, bei der ein erster Teilnehmer mit einem ersten Endgerät seine eigene IP-Adresse mitteilt und die IP-Adresse eines zweiten Teilnehmers mit einem zweiten Endgerät ermittelt. Beim Austausch der IP-Adressen bei der Initialisierung arbeiten die Endgeräte als sogenannte Verbindungsagenten, bei SIP beispielsweise als SIP USER AGENTs. Zur Übermittlung der IP-Adresse des ersten Teilnehmers (z.B. Anrufers) an den zweiter Teilnehmer (Angerufenen) erzeugt der Verbindungsagent beim ersten Teilnehmer eine Signalisierungsnachricht mit der IP-Adresse des ersten Endgeräts und sendet die Signalisierungsnachricht an einen dem ersten Endgerät zugeordneten ersten Verbindungsserver, beispielsweise bei SIP einen sogenannten Proxy-Server, bei H.323 einen sogenannten Gatekeeper. Der erste Verbindungsserver des ersten Endgeräts sendet die Signalisierungsnachricht an einen zweiten Verbindungsserver des zweiten Endgeräts, der die Signalisierungsnachricht an das zweite Endgerät weiterleitet. Das zweite Endgerät empfängt die Signalisierungsnachricht mit der IP-Adresse des ersten.Endgeräts. Der zweite Teilnehmer sendet seine eigene IP-Adresse auf analoge Weise an den ersten Teilnehmer.

Nach erfolgreicher Initialisierung wird mit den ausgetauschten IP-Adressen eine VoIP-Verbindung aufgebaut und es erfolgt die Übertragung der Sprachdaten und ggf. weiterer Daten, die nun direkt, ohne die Zwischenschaltung von Verbindungs-Servern, erfolgen kann. Je nach Transportprotokoll werden die Daten unverschlüsselt (z.B. bei RTP) oder verschlüsselt übertragen (z.B. bei SRTP). Gegebenenfalls werden Schlüssel für die Verschlüsselung gemäß einem Schlüsselaustauschprotokoll ausgetauscht, z.B. gemäß MIKEY, ZRTP oder mittels SSL-Handshake.

Die Signalisierung wird gemäß einem Signalisierungsprotokoll durchgeführt, beispielsweise SIP oder H.323, das letztere mit H.225 oder H.245.

Die Verbindungsagenten sind vor Hacker-Angriffen relativ ungeschützt. Folglich besteht die Gefahr, dass übermittelte IP-Adressen nicht vertrauenswürdig sind.

Der Erfindung liegt die Aufgabe zu Grunde, die Signalisierungsphase, insbesondere die Initialisierung, für eine VoIP-Verbindung sicherer zu machen.

Das in Anspruch 1 angegebene erfindungsgemäße Verfahren ist zur Initialisierung einer VoIP-Verbindung zwischen einem ersten Teilnehmer und mindestens einem zweiten Teilnehmer vorgesehen. Gemäß einem Signalisierungsprotokoll wird durch einen Verbindungsagenten des ersten Teilnehmers
- entweder eine Signalisierungsnachricht mit einer IP-Adresse des ersten Teilnehmers an einen Verbindungsserver (z.B. SIP-Proxy oder H.323 Gatekeeper) des ersten Teilnehmers übermittelt und zur Übermittlung an den zweiten Teilnehmer bereitgestellt, oder/und
- eine Signalisierungsnachricht mit einer IP-Adresse des zweiten Teilnehmers von dem zweiten Teilnehmer entgegengenommen.
Das Verfahren zeichnet sich dadurch aus, dass der Verbindungsagent in einem mit einem Mikroprozessor-Chip ausgestatteten Sicherheitsmodul implementiert ist.

Dadurch dass ein mit einem Mikroprozessor-Chip ausgestattetes Sicherheitsmodul die Funktion des Verbindungsagenten übernimmt, sind Hacker-Angriffe auf den Verbindungsagenten erschwert oder unmöglich gemacht.

Folglich hat die erfindungsgemäße Signalisierungsphase gegenüber einer herkömmlichen Signalisierungsphase eine erhöhte Sicherheit.

Die Signalisierungsnachricht wird wahlweise zudem durch den Verbindungsagenten erzeugt.

Als Signalisierungsprotokoll ist beispielsweise SIP oder H.323 vorgesehen, oder die für die Initialisierung erforderlichen Teile von H.323 wie H.225 oder H.245.

Bei SIP ist der Verbindungsagent beispielsweise als SIP USER AGENT gestaltet, insbesondere als USER AGENT CLIENT, falls er einen Request sendet oder als USER AGENT SERVER, falls er eine Response sendet (vgl. beispielsweise SIP-Spezifikation).

Wahlweise wird die bereitgestellte IP-Adresse an den zweiten Teilnehmer übermittelt und mit der übermittelten IP-Adresse eine VoIP-Verbindung zwischen den Teilnehmern aufgebaut, bzw. mit der entgegengenommen IP-Adresse eine VoIP-Verbindung aufgebaut.

Gemäß einer Weiterbildung der Erfindung gemäß einer ersten Alternative wird die VoIP-Verbindung durch das Sicherheitsmodul aufgebaut. Bei dieser ersten Alternative wirkt das Sicherheitsmodul als Verbindungsagent für die Erzeugung und/ oder den Austausch von Signalisierungsnachrichten mit IP-Adressen und zusätzlich als Verbindungsserver für den nachfolgenden Aufbau der VoIP-Verbindung.

Gemäß einer Weiterbildung der Erfindung gemäß einer zweiten Alternative wird die übermittelte bzw. entgegengenommene IP-Adresse an ein mit dem Sicherheitsmodul koppelbares Endgerät übertragen, wobei die VoIP-Verbindung durch das Endgerät aufgebaut wird. Bei dieser zweiten Alternative wirkt das Sicherheitsmodul als Verbindungsagent und das Endgerät nachfolgend als Verbindungsserver für den Verbindungsaufbau.

Wahlweise werden über die VoIP-Verbindung Multimediadaten gemäß einem Transportprotokoll, z.B. RTP oder SRTP, übermittelt. In diesem Fall ist die VoIP-Verbindung eine Datenaustauschverbindung, bei der Multimediadaten wie z.B. Sprachdaten ausgetauscht werden. Wahlweise werden über die VoIP-Verbindung Schlüsseldaten gemäß einem Schlüsselaustauschprotokoll, z.B. MIKEY, ZRTP, oder SSL-Handshake, übermittelt. In diesem Fall ist die VoIP-Verbindung eine Schlüsselaustauschverbindung, bei der Schlüsseldaten ausgetauscht werden, z.B. Schlüssel, die ggf. selbst verschlüsselt sind, oder Kryptogramme zur Authentisierung der Teilnehmer gegenüber einander.

Das erfindungsgemäße Verfahren ist bei zwei Teilnehmern anwendbar (z.B. Anrufer und Angerufener), und bei mehr als zwei Teilnehmern (z.B. mehreren Anrufern oder/und Angerufenen), insbesondere auch bei Konferenzschaltungen mit mehreren Teilnehmern.

Ein System zur Initialisierung einer VoIP-Verbindung zwischen einem ersten Teilnehmer und mindestens einem zweiten Teilnehmer ist ausgestattet mit einem dem Verfahren entsprechenden Verbindungsagenten. Das System zeichnet sich dadurch aus, dass der Verbindungsagent in einem mit einem Mikroprozessor-Chip ausgestatteten Sicherheitsmodul implementiert ist.

Das Sicherheitsmodul ist wahlweise in ein Endgerät für VoIP-Verbindungen fest oder entfernbar implementierbar. Als fest implementierbares Sicherheitsmodul kann beispielsweise ein TPM-artiges Modul (TPM = Trusted Platform Module) vorgesehen sein. Wahlweise ist das Sicherheitsmodul als in das Endgerät entfernbar einfügbarer tragbarer Datenträger gestaltet, beispielsweise als Chipkarte oder Token.

Wahlweise ist in dem Sicherheitsmodul weiter das Signalisierungsprotokoll teilweise oder ganz implementiert, beispielsweise SIP oder H.323 oder die für die Initialisierung erforderlichen Teile von H.323 wie H.225 oder H.245.

Wahlweise weist das System weiter ein mit dem Verbindungsserver koppelbares Endgerät auf, beispielsweise eines der beim Stand der Technik weiter oben beschriebenen Endgeräte.

Wahlweise sind in dem Sicherheitsmodul weiter persönliche VoIP-Daten eines Teilnehmers abgespeichert, wobei die VoIP-Daten mindestens eines der folgenden umfassen: eine VoIP-Telefonnummer, eine Sicherheitseinstellung, einen kryptographischen Schlüssel zur Verschlüsselung, einen kryptographischen Schlüssel zur Authentisierung.

Wahlweise verfügt jeder Teilnehmer über ein Sicherheitsmodul mit einem darin implementierten Verbindungsagenten. Die Erfindung ist aber ebenfalls dann anwendbar, wenn nur ein einzelner Teilnehmer über ein erfindungsgemäßes Sicherheitsmodul verfügt und ein oder mehrere weitere Teilnehmer über beliebige herkömmliche Endgeräte verfügen.

Im Folgenden wird die Erfindung an Hand von Ausführungsbeispielen und unter Bezugnahme auf die Zeichnung näher erläutert, in der zeigen:
- Fig.1: ein beispielhaftes Szenario einer Initialisierung einer VoIP-Verbindung, gemäß einer Ausführungsform der Erfindung;
- Fig. 2: eine beispielhafte Weiterbildung der Erfindung;
- Fig. 3: einen Protokollstapel eines als Internetchipkarte gestalteten Sicherheitsmoduls während der Initialisierung, gemäß einer Ausführungsform der Erfindung;
- Fig. 4: einen Protokollstapel eines als Internetchipkarte gestalteten Sicherheitsmoduls während einer VoIP-Verbindung, gemäß einer Ausführungsform der Erfindung.

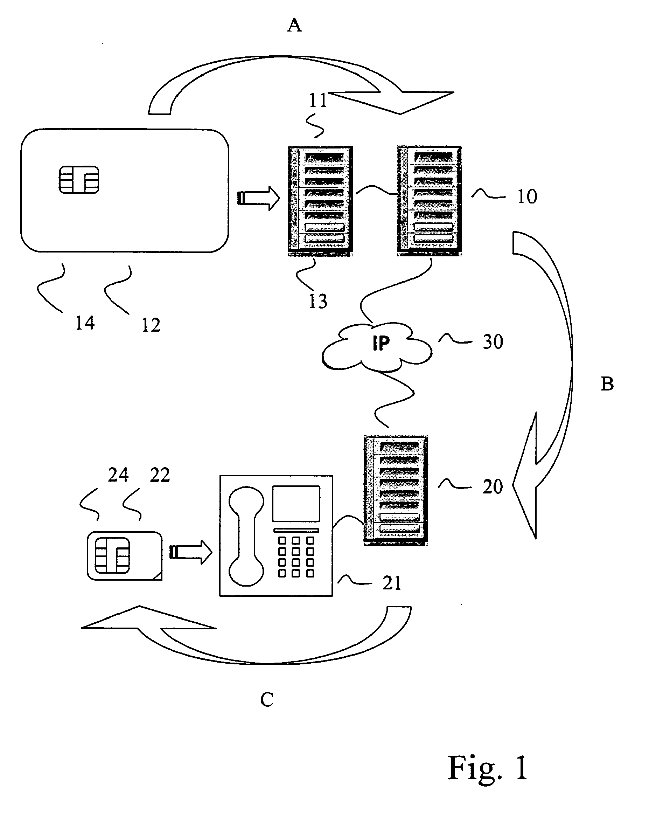

Fig.1 zeigt ein beispielhaftes Szenario einer Initialisierung einer VoIP-Verbindung, gemäß einer Ausführungsform der Erfindung. Als Signalisierungsprotokoll wird hier beispielhaft SIP verwendet. Beteiligt an der Initialisierung sind ein erster Verbindungsserver (z.B. SIP-Proxy) 10, ein zweiter Verbindungsserver (z.B. SIP-Proxy) 20, ein IP-Netzwerk 30, ein erstes Endgerät 11, ein PC (Personal Computer) 13, ein zweites Endgerät 21, ein erstes Sicherheitsmodul 12 und ein zweites Sicherheitsmodul 22. Das erste Endgerät 11 ist als Softphone gestaltet, das als Software-Anwendung in einen PC 13 integriert ist. Das zweite Endgerät 21 ist als VoIP-fähiges Festnetztelefon gestaltet, das auf beliebige Weise mit dem zweiten Verbindungsserver 20 verbunden werden kann. Das IP-Netzwerk 30 kann in an sich bekannter Weise ein oder mehrere verschiedene Komponenten wie z.B. weitere Server, drahtgebundene Verbindungen zwischen Servern, drahtlose Verbindungen zwischen Computern und/oder weitere Komponenten aufweisen, die in Fig. 1 nicht im Einzelnen dargestellt sind. Das erste Sicherheitsmodul 12 ist als Chipkarte gestaltet, die in den PC 13 entfernbar einfügbar ist, z.B. in einen Kartenleser (nicht dargestellt). Das zweiter Sicherheitsmodul 22 ist als Chipkarte gestaltet, die in das Festnetztelefon 21 entfernbar einfügbar ist. Im ersten Sicherheitsmodul 12 ist ein erster Verbindungsagent (z.B. SIP USER AGENT) 14 implementiert. Im zweiten Sicherheitsmodul 22 ist ein zweiter Verbindungsagent (z.B. SIP USER AGENT) 24 implementiert.

Die Pfeile A, B und C in Fig.1 veranschaulichen die Übermittlung der IP-Adresse des ersten Endgeräts 11 an das zweite Endgerät 21. Der erste Verbindungsagent 14 erzeugt eine Signalisierungsnachricht mit der IP-Adresse des ersten Endgeräts 11 und sendet sie an den ersten Verbindungsserver (z.B. SIP-Proxy) 10, Schritt A. Der erste Verbindungsserver (z.B. SIP-Proxy) 10 leitet die Signalisierungsnachricht über das IP-Netzwerk 30 an den zweiten Verbindungsserver (z.B. SIP-Proxy) 20 weiter, Schritt B. Der zweite Verbindungsagent (z.B. USER AGENT) 24 empfängt die Signalisierungsnachricht vom zweiten Verbindungsserver (z.B. SIP-Proxy) 20. Auf analoge Weise (in Fig.1 nicht dargestellten) wird die IP-Adresse des zweiten Endgeräts 21 an das erste Endgerät 11 übertragen.

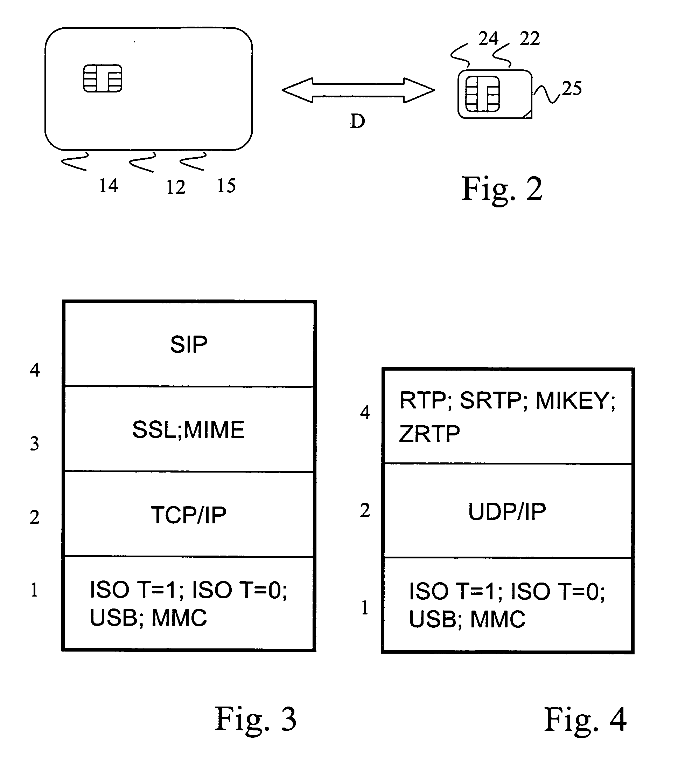

Fig. 2 zeigt eine beispielhafte Weiterbildung der Erfindung. Nachdem die Endgeräte 11, 21 ihre IP-Adressen ausgetauscht haben, beispielsweise wie an Hand von Fig.1 beschrieben, wird eine VoIP-Verbindung aufgebaut, vgl. Schritt D veranschaulicht durch Pfeil D. Im Beispiel aus Fig. 2 arbeiten die Sicherheitsmodule 12, 22 - zusätzlich zu ihrer Funktion als Verbindungsagenten 14, 24 - als Verbindungsserver 15, 25 bei der Verbindungsherstellung und stellen selbst die VoIP-Verbindung her, über die nun Multimediadaten (z.B. Sprachdaten) oder Schlüsseldaten ausgetauscht werden können. Alternativ zu dem in Fig. 2 dargestellten Beispiel wird eine von einem Sicherheitsmodul empfangene IP-Adresse vom Sicherheitsmodul an das jeweils zugeordnete Endgerät 11 bzw. 21 übermittelt, und die Endgeräte bauen unter Nutzung der Verbindungsserver 10, 20 die Verbindung auf.

Fig. 3 zeigt einen Protokollstapel eines als Internetchipkarte (internetfähige Chipkarte) gestalteten Sicherheitsmoduls während der Initialisierung, gemäß einer Ausführungsform der Erfindung. Auf dem Protokollstapel werden während der Initialisierung parallel unterschiedliche Protokolle abgearbeitet, die unterschiedlichen auf einander aufbauenden Protokollschichten angehören. In einer Transportschicht 1 wird ein Transportschichtprotokoll abgearbeitet, beispielsweise ISO T=0, ISO T=1, USB, MMC oder ein anderes Transportschichtprotokoll. In einer Transport/Netzwerkschicht 2 wird ein Transport/Netzwerkschicht- Protokoll wie z.B. TCP/IP abgearbeitet. In einer Sicherungsschicht 3 wird ein Sicherungsprotokoll wie z.B. SSL oder SMIME abgearbeitet. In einer VoIP-Schicht 4 wird das Signalisierungsprotokoll abgearbeitet, z.B. SIP.

Fig. 4 zeigt einen Protokollstapel eines als Internetchipkarte gestalteten Sicherheitsmoduls während einer VoIP-Verbindung, gemäß einer Ausführungsform der Erfindung. Die Transportschicht 1 ist wie in Fig. 3 gestaltet, d.h. wie bei der Initialisierung. In der Transport/Netzwerkschicht 2 wird nun ein Transport/ Netzwerkschicht- Protokoll wie z.B. UDP/IP abgearbeitet. In der VoIP-Schicht 4 wird nun ein Transportprotokoll abgearbeitet, insbesondere ein Datenübertragungsprotokoll wie RTP oder SRTP oder ein Schlüsselübertragungsprotokoll wie MIKEY, ZRTP etc.

## Patentansprüche

1. Verfahren zur Initialisierung einer VoIP-Verbindung zwischen einem ersten Teilnehmer und mindestens einem zweiten Teilnehmer,
wobei, gemäß einem Signalisierungsprotokoll (SIP, H.323), durch einen Verbindungsagenten (USER AGENT) des ersten Teilnehmers:
- eine Signalisierungsnachricht mit einer IP-Adresse des ersten Teilnehmers erzeugt und/ oder an einen Verbindungsserver (SIP-Proxy, Gatekeeper) des ersten Teilnehmers übermittelt wird und zur Übermittlung an den zweiten Teilnehmer bereitgestellt wird, oder / und
- eine Signalisierungsnachricht mit einer IP-Adresse des zweiten Teilnehmers von dem zweiten Teilnehmer entgegengenommen wird,
**dadurch gekennzeichnet, dass**
der Verbindungsagent (USER AGENT) in einem mit einem Mikroprozessor-Chip ausgestatteten Sicherheitsmodul implementiert ist.

2. Verfahren nach Anspruch 1, wobei die bereitgestellte IP-Adresse an den zweiten Teilnehmer übermittelt wird und mit der übermittelten IP-Adresse eine VoIP-Verbindung zwischen den Teilnehmern aufgebaut wird, oder/und wobei mit der entgegengenommen IP-Adresse eine VoIP-Verbindung zwischen den Teilnehmern aufgebaut wird.

3. Verfahren nach Anspruch 2, wobei die VoIP-Verbindung durch das Sicherheitsmodul aufgebaut wird.

4. Verfahren nach Anspruch 2, wobei die übermittelte bzw. entgegengenommene IP-Adresse an ein mit dem Sicherheitsmodul koppelbares Endgerät übertragen wird, und wobei die VoIP-Verbindung durch das Endgerät aufgebaut wird.

5. Verfahren nach einem der Ansprüche 2 bis 4, wobei über die VoIP-Verbindung Multimediadaten gemäß einem Transportprotokoll (RTP, SRTP) übermittelt werden und / oder Schlüsseldaten gemäß einem Schlüsselaustauschprotokoll (MIKEY, ZRTP, SSL-Handshake) übermittelt werden.

6. System zur Initialisierung einer VoIP-Verbindung zwischen einem ersten Teilnehmer und mindestens einem zweiten Teilnehmer,
mit einem Verbindungsagenten (USER AGENT)
- zur Erzeugung und/ oder Übermittlung einer Signalisierungsnachricht mit einer IP-Adresse des ersten Teilnehmers an einen Verbindungsserver des ersten Teilnehmers, um sie zur Übermittlung an den zweiten Teilnehmer bereitzustellen, oder / und
- zur Entgegennahme einer Signalisierungsnachricht mit einer IP-Adresse des zweiten Teilnehmers von dem zweiten Teilnehmer,
gemäß einem Signalisierungsprotokoll (SIP, H.323),
**dadurch gekennzeichnet, dass**
der Verbindungsagent (USER AGENT) in einem mit einem Mikroprozessor-Chip ausgestatteten Sicherheitsmodul implementiert ist.

7. System nach Anspruch 6, wobei das Sicherheitsmodul in ein Endgerät für VoIP-Verbindungen fest oder entfernbar implementierbar ist.

8. System nach Anspruch 7, wobei das Sicherheitsmodul als in das Endgerät entfernbar einfügbarer tragbarer Datenträger gestaltet ist.

9. System nach einem der Ansprüche 6 bis 8, wobei in dem Sicherheitsmodul weiter das Signalisierungsprotokoll (SIP, H.323) zumindest teilweise implementiert ist.

10. System nach einem der Ansprüche 6 bis 9, das weiter ein mit dem Sicherheitsmodul koppelbares Endgerät aufweist.

11. System nach einem der Ansprüche 6 bis 10, wobei in dem Sicherheitsmodul weiter persönliche VoIP-Daten eines Teilnehmers abgespeichert sind, wobei die VoIP-Daten mindestens eines der folgenden umfassen: eine VoIP-Telefonnummer, eine Sicherheitseinstellung, einen kryptographischen Schlüssel zur Verschlüsselung, einen kryptographischen Schlüssel zur Authentisierung.

12. System nach einem der Ansprüche 6 bis 11, wobei jeder Teilnehmer über ein Sicherheitsmodul mit einem darin implementierten Verbindungsagenten (USER AGENT) verfügt.
